# EUROPÄISCHE PATENTSCHRIFT

(11) **EP 3 280 929 B1**
(45) Veröffentlichungstag und Bekanntmachung des Hinweises auf die Patenterteilung: **03.11.2021**
(21) Anmeldenummer: 16719788.8
(22) Anmeldetag: 08.04.2016
(51) Int. Cl.: F16D 3/68, F16F 15/126, F16F 15/136, F16F 15/14

(54) **SCHWINGUNGSTILGER FÜR EINEN ANTRIEBSSTRANG**
VIBRATION DAMPER FOR A DRIVE TRAIN
AMORTISSEUR D'OSCILLATIONS POUR CHAÎNE CINÉMATIQUE

(30) Priorität: 08.04.2015 US 201514681583
(43) Veröffentlichungstag der Anmeldung: 14.02.2018
(73) Patentinhaber: Vibracoustic SE, 64293 Darmstadt (DE)
(72) Erfinder: DÜRRE, Markus, 79395 Neuenburg (DE); SINGLER, Wade, St. Joseph, Michigan 49085 (US)
(74) Vertreter: Patentanwälte Olbricht Buchhold Keulertz
(86) Internationale Anmeldenummer: PCT/EP2016/057833
(87) Internationale Veröffentlichungsnummer: WO 2016/162527

(56) Entgegenhaltungen:
- WO-A1-2012/052091
- GB-A- 813 336
- US-A- 2 834 226
- US-A- 4 194 372

## Beschreibung

Die Erfindung betrifft einen torsionalen Schwingungstilger für einen Antriebsstrang, wobei der Schwingungstilger eine Nabe und eine Schwungmasse aufweist. Der Schwingungstilger weist darüber hinaus eine Verbindungseinrichtung mit wenigstens einem Elastomerkörper auf, welche die Nabe und die Schwungmasse elastisch miteinander verbindet.

Derartige Schwingungstilger können beispielsweise an einer Verbindungsstelle zweier Wellen, beispielsweise einer Antriebswelle und einer Kardanwelle, eines Kraftfahrzeugs verwendet werden. Enden von Wellen können mit Hilfe von Verbindungseinrichtungen verbunden werden, die beispielsweise einen geringfügigen Winkelversatz ausgleichen können. Derartige Verbindungseinrichtungen können auch Schwingungsdämpfer oder -tilger aufweisen, um zu vermeiden, dass durch ein Antriebsmittel, beispielsweise einen Verbrennungsmotor, erzeugte Ungleichmäßigkeiten der rotatorischen Bewegung, beispielsweise Torsionsvibrationen, über den gesamten Antriebsstrang weiterverbreitet werden.

Gesetzlichen Auflagen zur Treibstoffeinsparung kann durch eine Vielzahl von Maßnahmen entsprochen werden. Unter anderem ist es möglich, Treibstoff durch Motor-Kaskaden-Aufladungen, Zylinderabschaltung (AFM), reduzierte Zylinderanzahl (down-sizing) oder einen Motorbetrieb bei sehr niedrigen Drehzahlen (down speeding) zu sparen. Diese Maßnahmen bewirken oftmals eine Vergrößerung der von dem Antriebsmittel erzeugten Torsionsvibrationen, insbesondere im niederfrequenten Bereich.

Torsionale Gelenkwellentilger, die beispielsweise einen Schwingungstilger der eingangs genannten Art aufweisen, können effektiv Torsionsvibrationen im Antriebsstrang verringern. Gewöhnlich drehen sich Schwingungstilger, insbesondere Dreh- oder auch Torsionsschwingungstilger mit der Welle mit, deren Schwingungen sie tilgen sollen. Bei der Konstruktion derartiger mit dem Antriebsstrang rotierender Bauteile ist folglich darauf zu achten, dass sich die Unwucht beispielsweise der Gelenkwelle durch den angebrachten Gelenkwellentilger nicht übermäßig erhöht und hierdurch ungewollt zusätzliche radiale Vibrationen erzeugt werden.

US 2,834,226 A offenbart einen torsionalen Schwingungstilger, welcher ein Nabenelement und einen Trägheitsring aufweist, die über Dämpfungselemente miteinander verbunden sind. Das Dämpfungselement weist ein Paar von Gummischeiben und eine metallische Zwischenschicht auf. GB 813 336 A befasst sich mit einem Torsionsschwingungsdämpfer für eine Kurbelwelle, welcher eine Nabe und einen Trägheitsring aufweist, die über eine gefaltete Gummischicht miteinander verbunden sind. In der gefalteten Gummischicht ist ein Ring vorgesehen. US 4,194,372 A beschreibt eine flexible Antriebskupplung, welche spiralförmig aufgewickelte Streifen aufweist, wobei die Räume zwischen zwei benachbarten Streifen mit einem elastischen Material gefüllt sind. WO 2012/052091 A1 beschreibt einen Drehschwingungstilger.

Die Erfindung geht auf die **Aufgabe** zurück, einen Schwingungstilger der eingangs genannten Art so weiterzubilden, dass die von dem Schwingungstilger verursachten Schwingungen reduziert werden, und die Zuverlässigkeit des Schwingungstilgers erhöht wird.

Zur **Lösung** der Aufgabe wird vorgeschlagen, einen Schwingungstilger für einen Antriebsstrang, der eine Nabe und eine Schwungmasse aufweist, wobei der Schwingungstilger eine Verbindungseinrichtung mit einem erstem Elastomerkörper und einem zweiten Elastomerkörper aufweist, welche die Nabe und die Schwungmasse elastisch miteinander verbindet derart weiterzubilden, dass die Verbindungseinrichtung wenigstens ein Verstärkungselement aufweist, das wenigstens teilweise in den ersten und zweiten Elastomerkörper eingebettet ist. Die Verbindungseinrichtung weist eine Außenhülse auf, die an einem Befestigungsabschnitt der Schwungmasse anliegt. Der erste Elastomerkörper ist an die Nabe und an das Verstärkungselement anvulkanisiert ist, während der zweite Elastomerkörper an das Verstärkungselement und die Außenhülse anvulkanisiert ist. Das weist eine bereichsweise zylindrische Zwischenhülse auf.

Diese Lösung hat den Vorteil, dass eine Radialsteifigkeit der Verbindungseinrichtung erhöht wird, ohne eine axiale Steifigkeit oder eine Torsionssteifigkeit wesentlich zu beeinflussen. Durch die erhöhte Radialsteifigkeit wird insbesondere die Verformung der Verbindungseinrichtung in radialer Richtung unter Belastung verringert. Wenn sich die Verbindungseinrichtung in radialer Richtung weniger verformt, ergibt sich eine geringere Verschiebung der Schwungmasse relativ zu der Nabe. Die Exzentrizität der Drehung der Schwungmasse wird somit reduziert, was sich in verringerter Unwucht niederschlägt.

Eine belastete Elastomerschicht, wie sie beispielsweise als Elastomerkörper zwischen einer Nabe und einer Schwungmasse eines Schwingungstilgers angeordnet ist, beult sich unter Belastung an ihren axialen Endseiten aus. Elastomere sind im Wesentlichen inkompressibel, so dass das Material der Elastomerschicht, das in radialer Richtung zusammengepresst wird, in axialer Richtung ausweicht. Umgekehrt beult sich eine derartige Elastomerschicht, wenn sie in radialer Richtung auseinandergezogen wird, an ihren axialen Endseiten ein.

Diese Verformung der axialen Endseiten ist umso stärker, je größer die Oberfläche der axialen freien Endseiten relativ zu den gebundenen, beispielsweise anvulkanisierten, Oberflächen der Elastomerschicht ist. Das Verstärkungselement unterteilt den Elastomerkörper in mehrere Teilkörper, deren Verhältnis von freier zu gebundener Oberfläche kleiner ist als das des ursprünglichen einzelnen Elastomerkörpers. In radialer Richtung ist der erfindungsgemäße Schwingungstilger dadurch deutlich steifer, weil das Elastomer nur in geringem Maße ausweichen kann und daher größere Kräfte benötigt werden, um das Elastomer zusammenzudrücken.

Die Eigenschaften in axialer Richtung sowie in Torsionsrichtung werden durch das Verstärkungselement nicht oder nur geringfügig beeinflusst.

Durch die geringere Verformung der Oberfläche der Elastomerkörper erhöht sich die Lebensdauer und somit die Zuverlässigkeit des Schwingungstilgers.

Die erfindungsgemäße Lösung ist darüber hinaus schmutzunempfindlich und keinem mechanischen Verschleiß unterworfen.

Vorteilhafte Ausgestaltungen sind Gegenstand der Unteransprüche.

Das Verstärkungselement weist eine bereichsweise zylindrische Zwischenhülse auf. Eine derartige Zwischenhülse kann besonders einfach so ausgestaltet werden, dass sie keine eigene Unwucht in den Schwingungstilger einbringt.

Das Verstärkungselement kann eine Vielzahl von Ausnehmungen zur Aufnahme von Elastomer aufweisen. Der Elastomerkörper kann dadurch formschlüssig mit dem Verstärkungselement verbunden werden, was die Zuverlässigkeit und die Lebensdauer des Schwingungstilgers erhöht. Darüber hinaus kann die formschlüssige Verbindung eine stoffschlüssige Verbindung (Anvulkanisieren) ersetzen wodurch kostenintensive Arbeitsschritte, beispielsweise ein Bindemittelauftrag, entfallen können. Neben den Kosten wird dabei gleichzeitig die Umweltbelastung verringert.

Das Verstärkungselement kann in einer Umfangsrichtung hintereinander angeordnete und voneinander beabstandete Aussparungen aufweisen. Wird das Verstärkungselement in den Elastomerkörper einvulkanisiert, so ist es dadurch einfacher möglich, das Vulkanisationswerkzeug robust zu gestalten. Durch die Aussparungen steht insbesondere mehr Raum für das Vulkanisationswerkzeug zur Verfügung.

Die Verbindungseinrichtung kann so ausgebildet sein, dass sie in die Schwungmasse einpressbar ist. Dies erlaubt einen modularen Aufbau des Schwingungstilgers. Durch einen derartigen modularen Aufbau kann dieselbe Schwungmasse mit unterschiedlichen Verbindungseinrichtungen zusammengesetzt werden, so dass sich Schwingungstilger mit unterschiedlichen Eigenschaften ergeben. Bei der Produktion des Schwingungstilgers kann somit flexibler auf individuelle Anforderungen eingegangen werden.

Die Verbindungseinrichtung weist in einer vorteilhaften Ausgestaltung in Umfangsrichtung wenigstens eine Ausnehmung auf, die beim Einpressen in die Schwungmasse schließbar ist. Diese Ausnehmung bewirkt, dass zur Vorspannung beziehungsweise Kalibrierung des Elastomerkörpers keine plastische Umformung von Metallteilen notwendig ist. Die Verbindungseinrichtung wird beim Einpressen in Umfangsrichtung komprimiert, bis die Ausnehmung beziehungsweise der Spalt geschlossen ist. Diese Verformung der Verbindungseinrichtung findet elastisch statt. Da sich dadurch der Durchmesser der Verbindungseinrichtung reduziert, werden die darin enthaltenen Elastomerschichten zusammengepresst und somit kalibriert. Gegenüber einer Kalibrierung durch Umformung kann eine deutlich höhere Vorspannung beziehungsweise Kalibrierung erreicht werden. Darüber hinaus wird die Flexibilität bei der Herstellung des Schwingungstilgers erhöht, insbesondere dadurch, dass zusätzliche Materialien verwendbar sind.

Die Verbindungseinrichtung kann einen Hauptabschnitt, der sich im Wesentlichen in axialer Richtung erstreckt, und einen Kragenabschnitt aufweisen, der in radialer Richtung von dem Hauptabschnitt abragt, wobei die Nabe einen Kragenabschnitt aufweist, der sich in radialer Richtung erstreckt und der an dem Kragenabschnitt der Verbindungseinrichtung anliegt. Durch diesen im Wesentlichen L-förmigen Querschnitt der Verbindungseinrichtung und der Nabe ergeben sich Anlageflächen in axialer Richtung, die einer Taumelneigung der Schwungmasse entgegenwirken. Dadurch wird eine erhöhte Kardaniksteifigkeit erreicht. Sollte die Schwungmasse also kardanisch ausgelenkt werden, so wird sie durch Krafteinwirkung in axialer Richtung mittels der Kragenabschnitte wieder aufgerichtet.

Um die Verwendbarkeit an einem Gelenkwellentilger zu verbessern, kann die Schwungmasse einen scheibenförmigen Verbindungsabschnitt aufweisen, in dem eine Öffnung zur Aufnahme einer Auslenkungsdämpfungseinrichtung angeordnet ist.

Die Auslenkungsdämpfungseinrichtung kann einen ringförmigen Körper aufweisen, von dem jeweils axial endseitig radial nach außen Vorsprünge zum Einklipsen in die Öffnungen derart abragen, dass die Vorsprünge axial endseitig Kanten der Öffnungen im eingeklipsten Zustand radial übergreifen. Eine derartige Auslenkungsdämpfungseinrichtung kann auf einfache Art in der Öffnung montiert werden. Die Auslenkungsdämpfungseinrichtung wird in die Öffnung eingepresst und dabei radial zusammengedrückt. Ist die Auslenkungsdämpfungseinrichtung in ihrer Montageposition angelangt, so schnappen die Vorsprünge an den axialen Enden der Öffnung ein und fixieren die Auslenkungsdämpfungseinrichtung. Ein zusätzlicher Arbeitsschritt zur Festlegung der Auslenkungsdämpfungseinrichtung in der Öffnung ist nicht nötig.

Um auch Materialien verwenden zu können, die für Klipsverbindungen nicht geeignet sind, kann die Auslenkungsdämpfungseinrichtung einen aus einem Metallband durch Rollformen erhaltbaren ringförmigen Körper aufweisen, von dem an einer ersten axialen Endseite einen Randflansch zu axialen Positionierung der Auslenkungsdämpfungseinrichtung in der Öffnung radial nach außen abragt und wobei eine zweite axiale Endseite zur Festlegung der Auslenkungsdämpfungseinrichtung umgebördelt ist.

Die Erfindung wird nachfolgend anhand von Ausführungsbeispielen weiter erläutert, welche in den beigefügten Zeichnungen schematisch dargestellt sind. Im Einzelnen zeigen:
- Fig. 1: einen axialen Schnitt durch einen Schwingungstilger gemäß einer ersten Ausführungsform der Erfindung;
- Fig. 2: einen vergrößerten Ausschnitt des Schnitts aus in Fig. 1;
- Fig. 3: eine isometrische Sicht auf eine einpressbare Verbindungseinrichtung;
- Fig. 4: eine axiale Seitenansicht der Verbindungseinrichtung aus Fig. 3;
- Fig. 5: einen axialen Schnitt durch einen Schwingungstilger gemäß einer zweiten Ausführungsform der Erfindung;
- Fig. 6: einen vergrößerten Ausschnitt des Schnitts aus Fig. 5;
- Fig. 7: eine isometrische Ansicht eines Verstärkungselements;
- Fig. 8: eine isometrische Ansicht eines weiteren Verstärkungselements;
- Fig. 9: eine isometrische Teilschnittansicht auf einen Schwingungstilger mit dem Verstärkungselement aus Fig. 8;
- Fig. 10: eine axiale Seitenansicht des Schwingungstilgers aus Fig. 9;
- Fig. 11: eine isometrische Ansicht eines weiteren Verstärkungselements;
- Fig. 12: eine isometrische Teilschnittansicht auf einen Schwingungstilger mit dem Verstärkungselement aus Fig. 11;
- Fig. 13: eine axiale Seitenansicht des Schwingungstilgers aus Fig. 11;
- Fig. 14: eine dreidimensionale Ansicht eines Schwingungstilgers gemäß einer dritten Ausführungsform der Erfindung;
- Fig. 15: eine dreidimensionale Schnittansicht des Schwingungstilgers aus Fig. 14;
- Fig. 16: eine dreidimensionale Teilschnitt- und Explosionsansicht von Einzelteilen des Schwingungstilgers aus Figur 14;
- Fig. 17: eine Teilansicht eines axialen Schnittes durch einen Schwingungstilger gemäß einer vierten Ausführungsform der Erfindung mit einem Torsionsanschlag;
- Fig. 18: eine dreidimensionale Ansicht des Torsionsanschlags aus Fig. 17;
- Fig. 19: eine dreidimensionale Schnittansicht des Torsionsanschlags aus Fig. 17;
- Fig. 20: eine dreidimensionale Illustration eines Verfahrensschritts zur Herstellung eines Torsionsanschlags;
- Fig. 21: eine dreidimensionale Ansicht eines Torsionsanschlags, die mit dem in Fig. 20 illustrierten Verfahren gewonnen wurde und
- Fig. 22: eine Ansicht wie in Fig. 17 mit einem Torsionsanschlag aus Fig. 21.

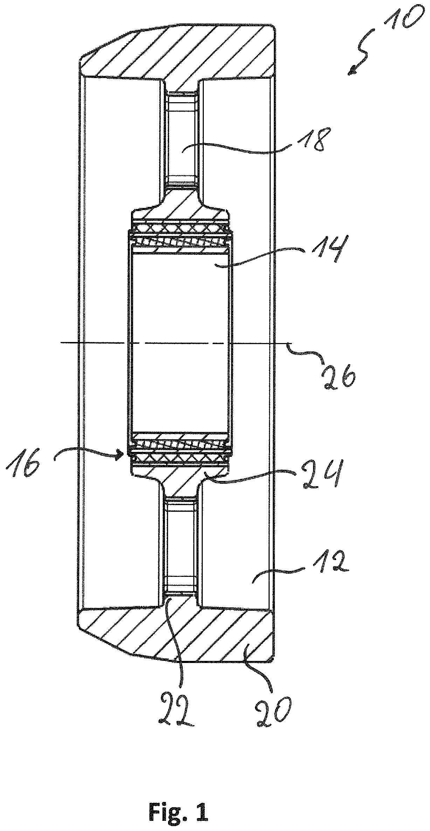

Der in Fig. 1 gezeigte Schwingungstilger 10 weist eine Schwungmasse 12, eine Nabe 14 sowie eine Verbindungseinrichtung 16 auf. Die Schwungmasse 12, die Nabe 14 und die Verbindungseinrichtung 16 können jeweils auf rotationssymmetrische Körper zurückgehen. Die Verbindungseinrichtung 16 verbindet die Schwungmasse 12 elastisch mit der Nabe 14.

Der Schwingungstilger 10 ist beispielsweise zur Anordnung an einer Gelenkwellenkupplung vorgesehen. Zu diesem Zweck weist die Schwungmasse 12 beispielsweise Öffnungen 18 zur Aufnahme von Montagebuchsen (nicht gezeigt) einer Gelenkwellenkupplung auf.

Die Schwungmasse 12 weist einen radial äußeren Schwungring 20, einen Verbindungsabschnitt 22, in dem die Öffnungen 18 angeordnet sind, sowie einen radial inneren Befestigungsabschnitt 24 auf.

Die Schwungmasse 12, die Nabe 14 und die Verbindungseinrichtung 16 sind beispielsweise konzentrisch um eine Drehachse 26 angeordnet. Um eine geringe Unwucht zu erreichen, können die Schwungmasse 12, die Nabe 14 sowie die Verbindungseinrichtung 16 derart ausgestaltet sein, dass ihr Schwerpunkt jeweils auf der Drehachse 26 liegt.

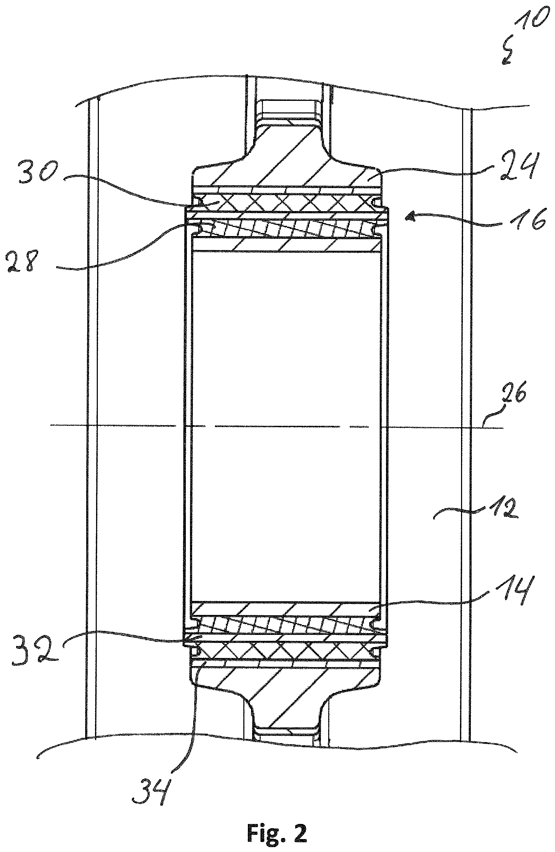

Die Verbindungseinrichtung 16 weist, wie in Fig. 2 gezeigt, einen ersten Elastomerkörper 28 und einen zweiten Elastomerkörper 30 auf, in die ein Verstärkungselement 32 eingebettet ist. Darüber hinaus weist die Verbindungseinrichtung 16 eine Außenhülse 34 auf, die an dem Befestigungsabschnitt 24 der Schwungmasse 12 anliegt. Der erste Elastomerkörper 28 und der zweite Elastomerkörper 30 bilden zusammen eine funktionale Einheit, in die das Verstärkungselement 32 eingebettet ist und können einstückig ausgeführt sein.

Der erste Elastomerkörper 28 ist an die Nabe 14 und an das Verstärkungselement 32 anvulkanisiert. Der zweite Elastomerkörper 30 ist an das Verstärkungselement 32 und der Außenhülse 34 anvulkanisiert. Die Verbindungseinrichtung 16 ist in den Verbindungsabschnitt 22 des Schwungrings 12 eingepresst, so dass die Außenhülse 34 mit dem Befestigungsabschnitt 24 eine kraftschlüssige Verbindung eingeht.

Der Schwingungstilger 10 dient beispielsweise dem Tilgen von Torsionsschwingungen, also von Gleichlaufschwankungen bei der Drehbewegung um die Drehachse 26. Die Elastomerkörper 28, 30 dienen dabei der elastischen Kopplung der Nabe 14 mit der Schwungmasse 12. Das Trägheitsmoment der Schwungmasse 12 wird mittels dieser elastischen Kopplung auf die Nabe 14 und eine damit beispielsweise verbundene Welle eines Antriebsstrangs übertragen, um einer Ausbreitung oder Verstärkung der Gleichlaufschwankungen entgegenzuwirken.

Die Elastomerkörper 28, 30 und das Verstärkungselement 32 wirken, was ihre Eigenschaften, insbesondere die Steifigkeit, in Umlauf- beziehungsweise Torsionsrichtung betrifft, so zusammen, dass sie einem Elastomerkörper entsprechen, dessen Dicke in Radialrichtung der Summe der Dicken der Elastomerkörper 28,30 entspricht. Ihre Anordnung entspricht einer Hintereinanderschaltung der Elastomerkörper 28, 30. Gegenüber einem herkömmlichen Elastomerkörper ohne Verstärkungselement 32 sind die Eigenschaften der Verbindungseinrichtung 16 in Torsionsrichtung also nahezu unverändert.

Elastomere, beispielsweise Gummi oder Silikon, sind inkompressibel. Wird ein herkömmlicher Elastomerkörper ohne Verstärkungselement 32 zwischen der Nabe 14 und der Schwungmasse 12 vorgesehen und bei einer radialen Verschiebung der Nabe 14 gegenüber der Schwungmasse 12 zusammengedrückt, so weicht das Elastomer in axialer Richtung aus, wodurch die axialen freien Oberflächen des herkömmlichen Elastomerkörpers ausgebeult werden. Auf der radial gegenüberliegenden Seite ergibt sich durch die radiale Verschiebung, dass sich die axialen freien Oberflächen des Elastomerkörpers konkav einbeulen. Die Verformung der axialen freien Oberflächen des Elastomerkörpers ist umso größer, je größer das Verhältnis von freier Oberfläche zu gebundener, beispielsweise anvulkanisierter Oberfläche ist.

Die erfindungsgemäße Ausgestaltung der Verbindungseinrichtung 16 mit einem Verstärkungselement 32 bewirkt, dass das Verhältnis von freier Oberfläche zu gebundener Oberfläche der Elastomerkörper 28, 30 besonders klein wird, weil die Dicke der Elastomerkörper 28, 30 in Radialrichtung vergleichsweise klein ist. Dadurch wird die Verformung der axialen freien Oberflächen reduziert und gleichzeitig die Steifigkeit der Verbindungseinrichtung 16 in radialer Richtung erhöht, da das Volumen der Elastomerkörper 28, 30, das in axialer Richtung ausweichen kann, reduziert wird. Das Verstärkungselement 32 ist beispielsweise als zylindrische Metallhülse ausgebildet.

Somit wird durch das Verstärkungselement 32 erreicht, dass mit derselben Menge Elastomer eine höhere Radialsteifigkeit der Verbindungseinrichtung 16 erreicht wird, ohne die Torsionssteifigkeit oder die Lebensdauer des Schwingungstilgers 10 zu verringern. Durch die hohe Radialsteifigkeit wird die Auslenkung der Schwungmasse 12 bei radialer Belastung begrenzt und so zusätzliche Unwucht des Schwingungstilgers 10 vermieden.

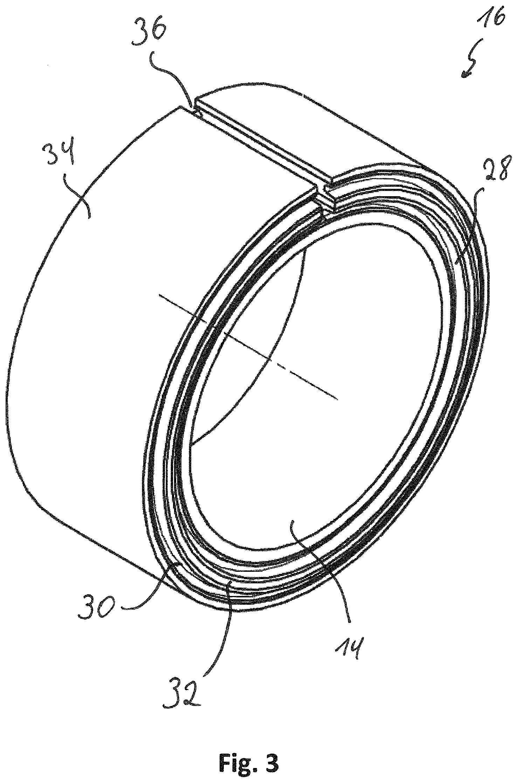

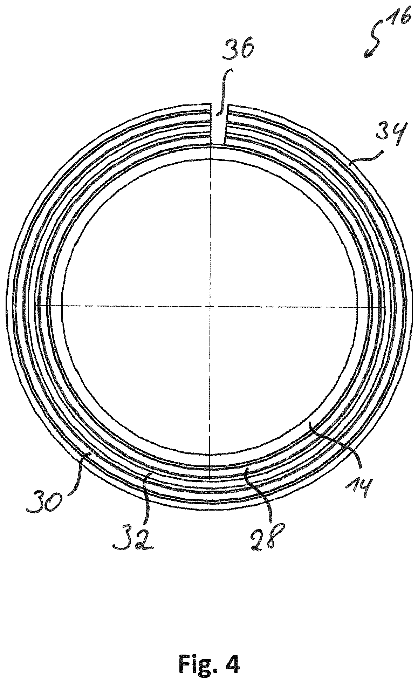

Fig. 3 und Fig. 4 zeigen die Verbindungseinrichtung 16 zusammen mit der Nabe 14 als Halbfertigprodukt vor dem Einpressen in die Schwungmasse 12. Die Verbindungseinrichtung 16, die weitgehend rotationssymmetrisch ausgebildet ist, weist in Umfangsrichtung eine Ausnehmung 36 auf, die sich über die gesamte axiale Breite der Verbindungseinrichtung 16 erstreckt. Ein Außenumfang der Verbindungseinrichtung 16 ist größer als eine zur Aufnahme der Verbindungseinrichtung 16 vorgesehene Öffnung in dem Befestigungsabschnitt 24 der Schwungmasse 12.

Beim Einpressen der Verbindungseinrichtung 16 in die Schwungmasse 12 wird folglich die Verbindungseinrichtung 16 in Umfangsrichtung komprimiert, so dass sich die Ausnehmung 36 schließt. Durch die dabei auftretenden Kräfte wird der Kraftschluss zwischen der Außenhülse 34 und der Schwungmasse 12 erzeugt. Darüber hinaus wird das Material der Elastomerkörper 28, 30 vorgespannt beziehungsweise kalibriert.

Durch die Ausnehmung 36 ist es nicht notwendig, zum Kalibrieren das Material der Außenhülse 34, des Verstärkungselements 32 oder der Nabe 14 umzuformen. Dadurch ist es möglich, eine besonders hohe Kalibrierung zu erreichen. Dies hat zur Folge, dass die erreichbare Radialsteifigkeit der Verbindungseinrichtung 16 im eingepressten Zustand weiter steigt.

Die Außenhülse 34, das Verstärkungselement 32 und die Nabe 14 sind gewöhnlich aus Metall gebildet. Aufgrund dessen, dass keine Umformung der Außenhülse 34, des Verstärkungselements 32 oder der Nabe 14 notwendig ist, ist auch die Verwendung anderer Materialen, beispielsweise die Verwendung von Kunststoff denkbar.

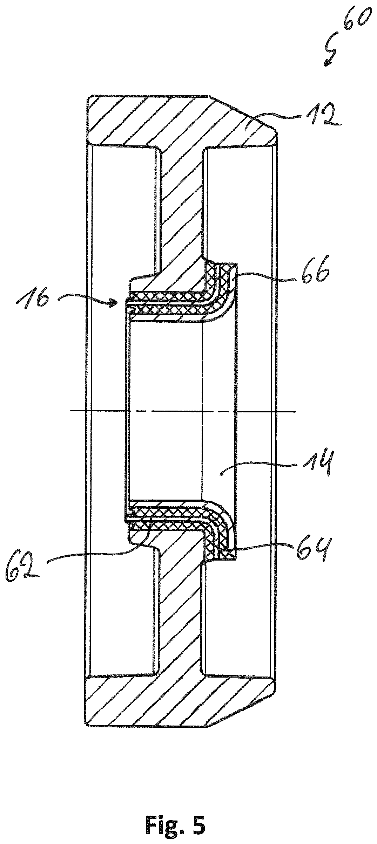

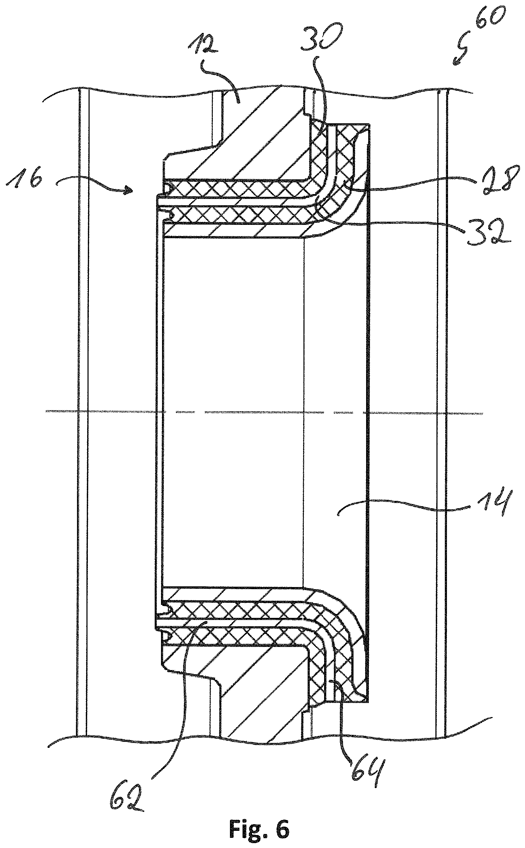

In Fig. 5 und Fig. 6 ist eine zweite Ausführungsform der Erfindung in Form eines Schwingungstilgers 60 gezeigt. Um eine Kardanikbewegung der Schwungmasse 12 zu verringern, weist die Verbindungseinrichtung 16 einen Hauptabschnitt 62 sowie einen Kragenabschnitt 64 auf. Der Hauptabschnitt 62 ist im Wesentlichen zylindrisch. Der Kragenabschnitt 64 ragt in radialer Richtung von dem Hauptabschnitt 62 in der Art eines Flansches nach außen ab. Der erste Elastomerkörper 28, der zweite Elastomerkörper 30 und das Verstärkungselement 32 weisen somit im Querschnitt eine L-Form auf.

Die Nabe 14 ist ebenfalls L-förmig mit einem Kragenabschnitt 36 ausgebildet, um die Verbindungseinrichtung 16 im Bereich des Kragenabschnitts 64 in axialer Richtung zwischen sich und der Schwungmasse 12 einzuschließen. Dadurch wird im Fall einer kardanischen Auslenkung, beispielsweise bei einer Taumelbewegung der Schwungmasse 12, in axialer Richtung eine Stabilisierung der Schwungmasse 12 bewirkt, da sich in axialer Richtung auf einer Seite eine Druckbelastung und auf der radial gegenüberliegenden Seite der Nabe 14 und der Verbindungseinrichtung 16 eine Zugbelastung ergibt. In Richtung dieser Belastungen auf Zug/Druck sind Elastomere deutlich steifer als in Scherrichtung. Der Schwingungstilger 60 ist in Axialrichtung somit deutlich steifer gelagert als ein Schwingungstilger, dessen Verbindungseinrichtung 16 und Nabe 14 keinen Kragenabschnitt 64, 66 aufweisen.

Die Kragenabschnitte 64, 66 ragen in der vorliegenden Ausführungsform senkrecht zu der Drehachse 26 ab. Es ist auch möglich, die Kragenabschnitte 64,66 in einem anderen Winkel als 90° relativ zu der Drehachse 26 abragen zulassen.

Die Verbindungseinrichtung 16 kann auf verschiedene Arten ausgestaltet werden.

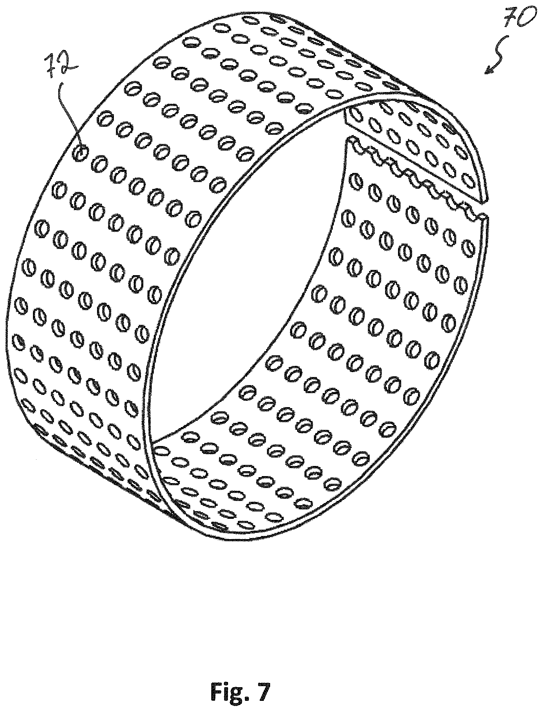

Fig. 7 zeigt eine beispielhafte Ausgestaltung eines Verstärkungselements 70. Das Verstärkungselement ist zylindrisch ausgebildet und aus einem Lochblech geformt. Daher weist das Verstärkungselement 70 eine Vielzahl von Ausnehmungen 72 auf. Bei Herstellung der Verbindungseinrichtung 16 wird das Verstärkungselement 70 zusammen mit der Außenhülse 34 und der Nabe 14 in ein Vulkanisationswerkzeug eingelegt und mit Elastomer umspritzt. Das Elastomer fließt in die Ausnehmungen 72 und bildet so nach der Vulkanisation einen Formschluss mit dem Verstärkungselement 70.

Die Ausnehmungen 72 können zylinderförmig sein, aber auch jede andere geeignete Form aufweisen. Der Durchmesser der Ausnehmungen 72 liegt beispielsweise zwischen 1/4 und 1/20 der axialen Breite des Verstärkungselements 70. Die Ausnehmungen 72 können beispielsweise in Reihen oder in versetzten Reihen angeordnet sein. Dadurch, dass das Elastomer der Elastomerkörper 28, 30 beim Gießen oder Spritzen die Ausnehmungen 72 ausfüllt, wird ein Formschluss erzeugt, der eine stoffschlüssige Verbindung, z.B. Anvulkanisieren, überflüssig machen kann.

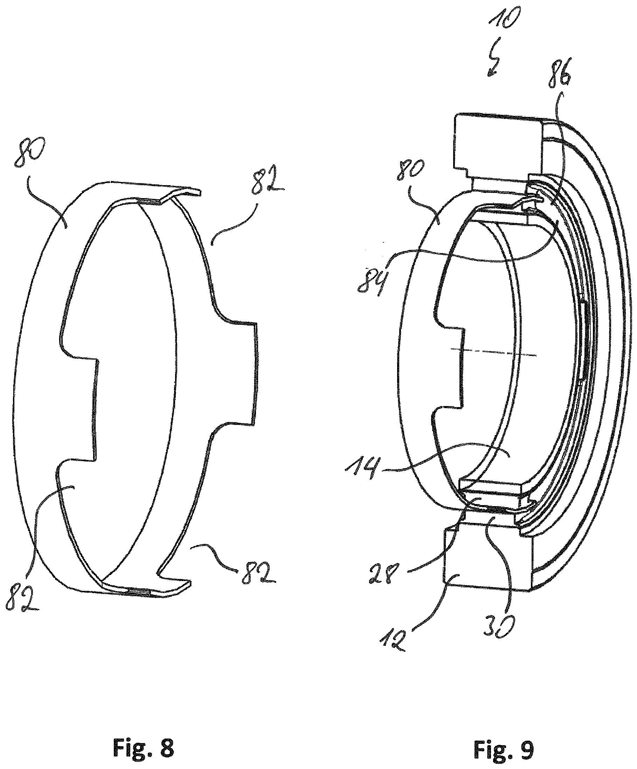

Fig. 8 zeigt ein weiteres Verstärkungselement 80. Das Verstärkungselement 80 hat die Form eines ringförmig umlaufenden Metallbandes, wobei an einer axialen Seite des Metallbandes Aussparungen 82 vorgesehen sind. Die Aussparungen 82 können so angeordnet sein, dass ein Schwerpunkt des Verstärkungselements 80 weiterhin auf der Drehachse 26 liegt. Insbesondere können die Aussparungen 82 in Umfangsrichtung gleichmäßig verteilt sein.

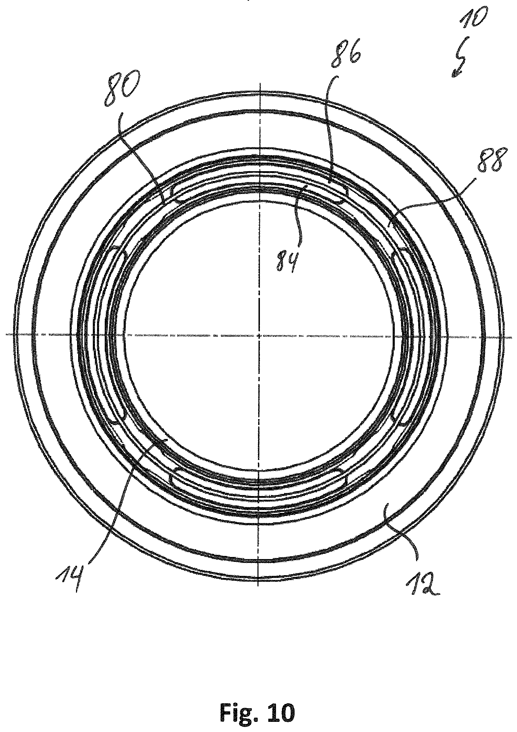

Diese Ausgestaltung des Verstärkungselements 80 ist besonders vorteilhaft, wenn die Elastomerkörper 28,30 der Verbindungseinrichtung 16 nicht als vollständig umlaufende ringförmige Elastomerkörper ausgebildet sind. Beispielhaft ist dies in den Fig. 9 und 10 gezeigt. Der erste Elastomerkörper 28 und der zweite Elastomerkörper 30 weisen sich jeweils in Umfangsrichtung erstreckende Ausnehmungen 84,86 auf. Das Material der so ausgestalteten Elastomerkörper 28, 30 bildet als funktionale Einheit elastische Stützspeichen 88.

Die Aussparungen 82 erlauben es, ein Vulkanisationswerkzeug zur Herstellung der Stützspeichen 88 robuster auszugestalten, da der Raum der Aussparungen 82 für das Vulkanisationswerkzeug zusätzlich zur Verfügung steht.

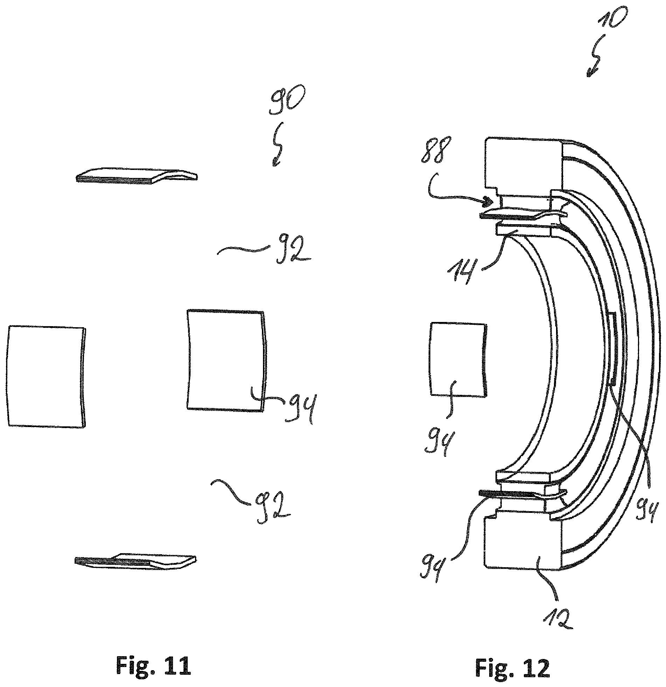

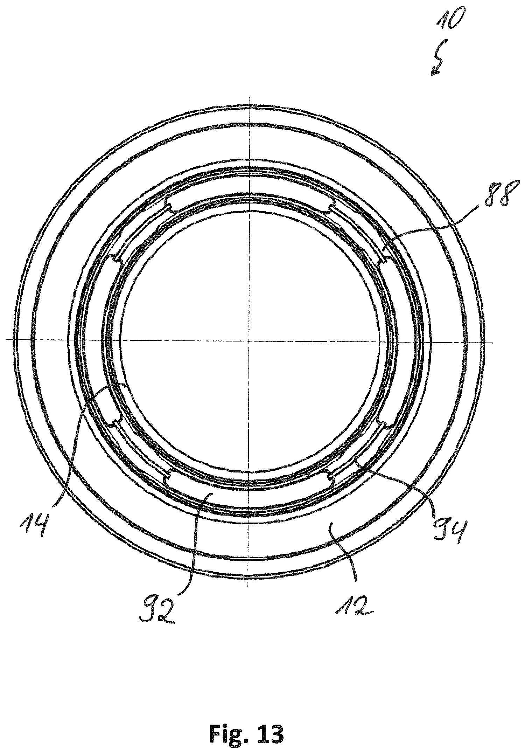

Eine mögliche Weiterentwicklung dieses Gedankens führt zu der in den Fig. 11 bis 13 gezeigten Ausführungsform in Form eines Verstärkungselements 90. Das Verstärkungselement 90 weist Aussparungen 92 auf, die sich über die gesamte axiale Breite des Verstärkungselements 90 erstrecken. Das Verstärkungselement 90 wird somit von einer Mehrzahl von Zwischenplatten 94 gebildet, die jeweils in die Stützspeichen 88 eingebettet sind.

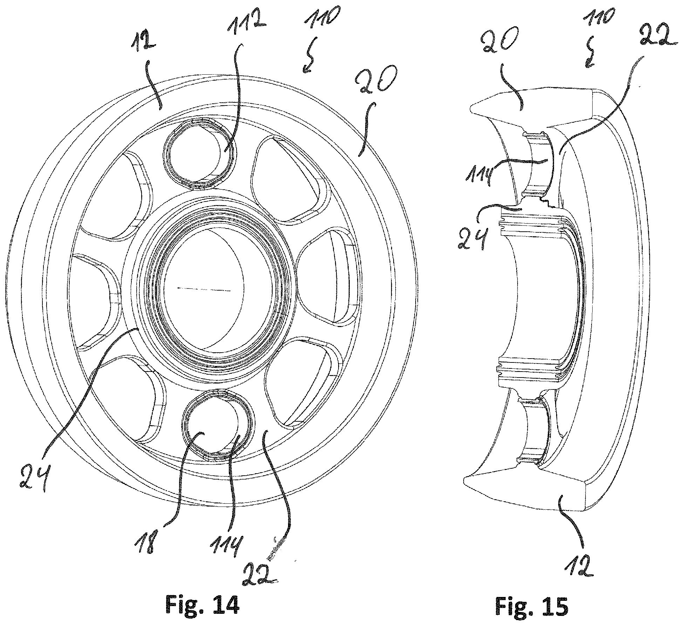

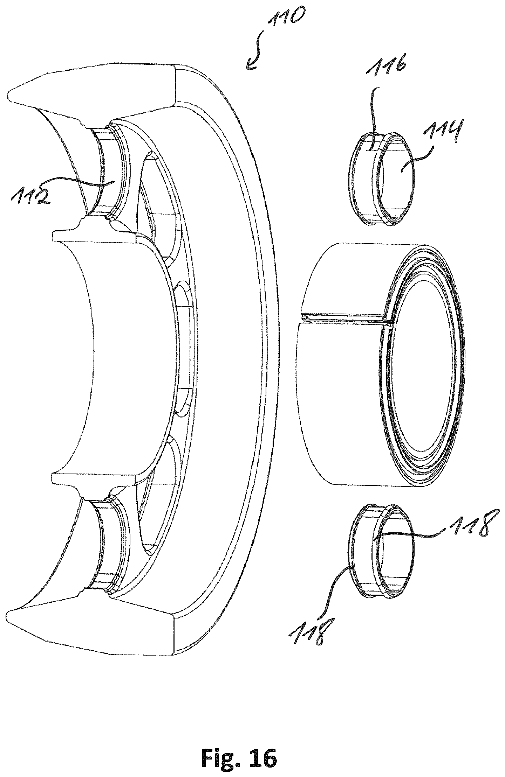

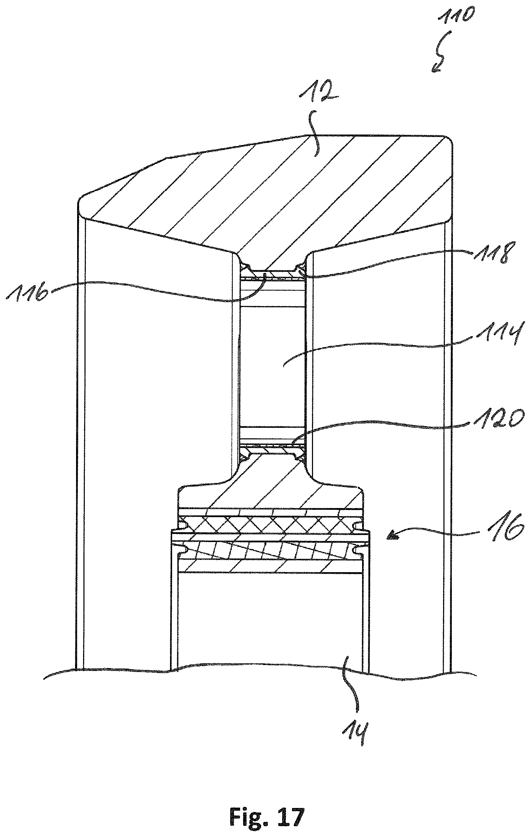

Ein Schwingungstilger 110, der zur Anordnung beispielsweise an einer Gelenkwellenkupplung vorgesehen ist, ist in den Fig. 14 bis 17 gezeigt. In dem Befestigungsabschnitt 24 der Schwungmasse 12 sind Öffnungen 18 vorgesehen. Die in den Öffnungen 18 angeordneten Montagebuchsen, die beispielsweise Teil der Gelenkwellenkupplung (nicht gezeigt) sein können, berühren eine Innenfläche 112 der Öffnungen 18 gewöhnlich nicht. Der Befestigungsabschnitt 24 kann bei großer torsionaler Belastung allerdings soweit torsional ausgelenkt werden, dass die Montagebuchsen mit den Innenflächen 112 in Kontakt kommen.

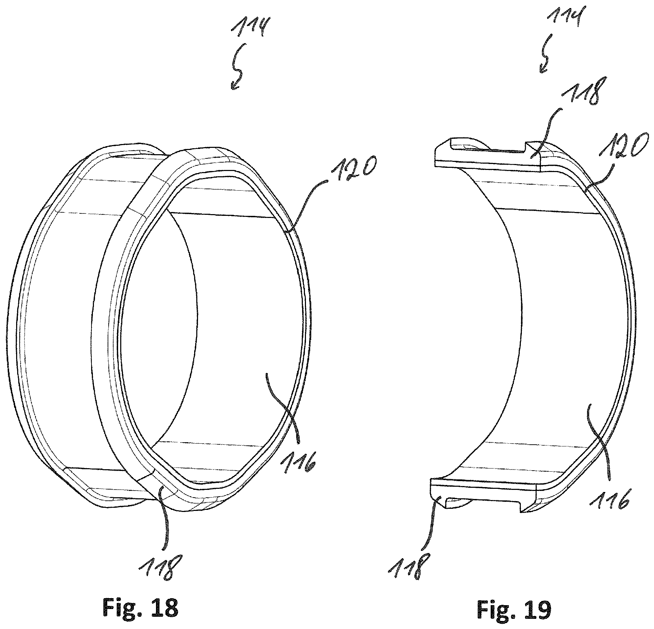

Bei einem solchen Kontakt kann der Befestigungsabschnitts 24 oder die betroffene Montagebuchse beschädigt werden. De Weiteren werden durch den Anschlag störende metallische Geräusche erzeugt. Um dies zu verhindern, werden an den Innenflächen 112 Anschlagsdämpfungseinrichtungen in Form von Torsionsanschlägen 114 angeordnet, die in den Fig. 18 und 19 beispielhaft gezeigt sind. Die Torsionsanschläge 114 weisen einen ringförmigen Körper 116 auf, von dem jeweils axial endseitig umlaufende Vorsprünge 118 radial nach außen abragen. Die Torsionsanschläge 114 lassen sich aufgrund der Vorsprünge 118 durch eine Clipsverbindung, bei der die Vorsprünge 118 Ränder der Öffnungen 18 übergreifen, in den Öffnungen 18 befestigen. Bei der Montage des Schwingungstilgers 110 werden die Torsionsanschläge 114 mittels der Vorsprünge 118 eingeklipst.

An einer Innenseite der Torsionsanschläge 114 kann eine Beschichtung 120, beispielsweise aus einem kostengünstigen thermoplastischen Elastomer, angebracht sein. Die Torsionsanschläge 114 können im Wesentlichen aus Kunststoff hergestellt sein.

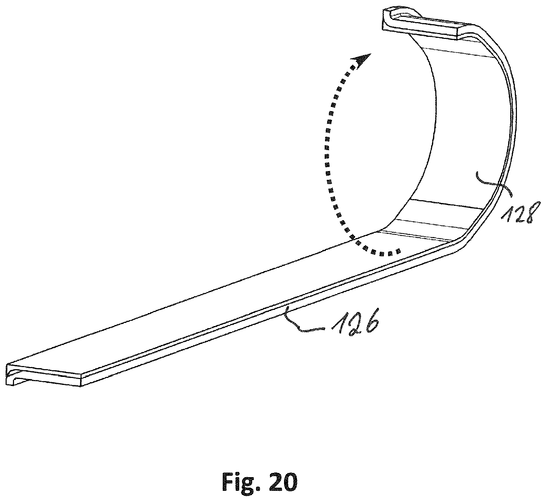

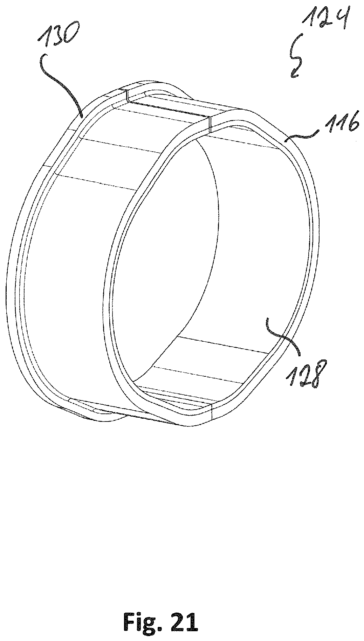

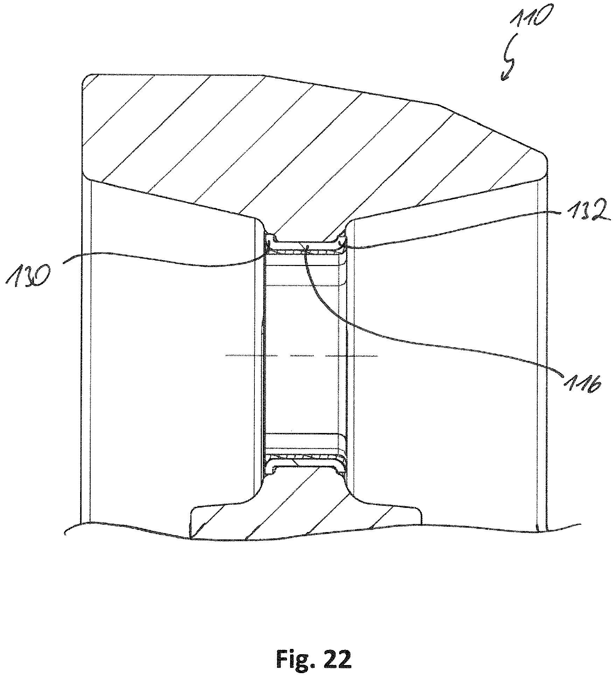

Eine weitere Ausführungsform eines Torsionsanschlags 124 ist in den Fig. 20 bis 22 gezeigt. Der Torsionsanschlag 124 ist beispielsweise aus einem Metallband 126 gerollt, das an einer Innenseite 128 mit einer Beschichtung, beispielsweise aus einem weichen Kunststoff oder einem Vlies, beschichtet ist.

An einer ersten axialen Seite des Torsionsanschlags 124 ist ein vorspringender Festlegungsrand 130 angeordnet, mit dem der Torsionsanschlag 124 beim Einsetzen in den Schwingungstilger 110 an einem Rand der Öffnung 18 in Anlage gebracht werden kann. Ein Festlegungsrand 132 an einer zweiten axialen Seite des Torsionsanschlags 124 kann zur Sicherheit umgebördelt werden, um die Sicherheit der Verbindung zu erhöhen.

Gegenüber einem Herstellungsverfahren, bei dem ein Elastomerkörper 28, 30 an die Schwungmasse 12 anvulkanisiert wird, hat ein modulares Verfahren, bei dem die Verbindungseinrichtung 16 wie oben beschrieben (Fig. 3, 4, 16) zusammen mit der Nabe 14 als Modul separat von der Schwungmasse 12 vorgefertigt wird, mehrere Vorteile. So ist weniger mechanische Bearbeitung der Schwungmasse 12, die gewöhnlich als Gussteil ausgeführt ist, notwendig. Dies ist insbesondere eine Folge davon, dass die Schwungmasse 12 nicht mehr in das Vulkanisationswerkzeug aufgenommen werden muss, was eine sehr präzise Formgebung der Schwungmasse 12 erfordert.

Des Weiteren entfällt ein Verfahrensschritt, bei dem der Schwungring mit Bindemittel für die Vulkanisation vorbehandelt wird. Das Vulkanisationswerkzeug wird ebenfalls vereinfacht, da lediglich die Nabe 14, das Verstärkungselement 32 und die Außenhülse 34 in die Vulkanisationsform eingelegt werden müssen. Platz für die schwere und große Schwungmasse 12 muss in dem Vulkanisationswerkzeug nicht vorgesehen werden. Die zu vulkanisierenden Teile sind kleiner, wodurch sich die Fachheit des Vulkanisationwerkzeuges erhöht, was geringere Stückkosten in der Produktion bewirkt.

Separat hergestellte Torsionsanschläge 114, 124 können in dieser modularen Bauweise als Standardbauteil in verschiedenen Designs flexibel eingesetzt werden.

Die Verstärkungselemente 32, 70, 80, 90 können mit allen Ausführungsformen der Verbindungseinrichtung 16 sowie mit allen Ausführungsformen des Schwingungstilgers 10, 60, 110 kombiniert werden. Die Torsionsanschläge 114,124 können mit allen Ausführungsformen des Schwingungstilgers 10, 60, 110 kombiniert werden. Sofern eine Ausführungsform des Schwingungstilgers 10, 60, 110 keine Öffnungen 18 aufweist, können diese an geeigneter Stelle hinzugefügt werden.

Die Verbindungseinrichtung 16 kann mehr als ein Verstärkungselement 32, 70, 80, 90 aufweisen, so dass die Verbindungseinrichtung 16 mehr als zwei Elastomerkörper 28, 30 aufweisen kann. Unterschiedliche Verstärkungselemente 32, 70, 80, 90 können relativ zueinander in radialer und/oder in Umfangsrichtung beabstandet sein. Werden mehrere Verstärkungselement 32, 70, 80, 90 verwendet, so müssen diese nicht von identischer Bauart sein. Die Elastomerkörper 28, 30 können in einer derartigen Ausführungsform dieselbe oder unterschiedliche Schichtdicken aufweisen.

Der erfindungsgemäße Schwingungstilger 10, 60, 110 kann an nahezu allen drehenden Teilen des Antriebsstrangs angeordnet sein. Insbesondere ist eine Verbindung mit einem Kreuzgelenk-, Gleichlaufgelenk-, Getriebe- oder Mehrarmflansch möglich. Zur Anordnung bevorzugt sind Orte, an denen störende Schwingungen verstärkt auftreten, beispielsweise durch lokale Resonanzüberhöhung.

Für den Fachmann ist selbstverständlich, dass die hier angegebenen Ausführungsformen die Erfindung lediglich beispielhaft zeigen. Die verwendeten Bezugszeichen dienen lediglich der anschaulichen Darstellung der Ausführungsformen und nicht der Beschränkung der Erfindung. Der Fachmann kann diverse Merkmale der hier gezeigten Ausführungsformen variieren oder andere Ausführungsformen entwerfen, ohne den Bereich der Erfindung zu verlassen, der allein durch die beigefügten Ansprüche definiert ist.

**Bezugszeichenliste**

| | | | |
|---|---|---|---|
| 10 | Schwingungstilger | 82 | Aussparung |
| 12 | Schwungmasse | 84 | Ausnehmung |
| 14 | Nabe | 86 | Ausnehmung |
| 16 | Verbindungseinrichtung | 88 | Stützspeiche |
| 18 | Öffnung | | |
| 20 | Schwungring | 90 | Verstärkungselement |
| 22 | Verbindungsabschnitt | 92 | Aussparung |
| 24 | Befestigungsabschnitt | 94 | Zwischenplatte |
| 26 | Drehachse | | |
| 28 | erster Elastomerkörper | 110 | Schwingungstilger |
| 30 | zweiter Elastomerkörper | 112 | Innenfläche |
| 32 | Verstärkungselement | | |
| 34 | Außenhülse | 114 | Torsionsanschlag |
| 36 | Aussparung | 116 118 | Körper Vorsprung |
| 60 | Schwingungstilger | 120 | Beschichtung |
| 62 | Hauptabschnitt | | |
| 64 | Kragenabschnitt | 124 | Torsionsanschlag |
| 66 | Kragenabschnitt | 126 128 | Metallband Beschichtung |
| 70 | Verstärkungselement | 130 | Festlegungsrand |
| 72 | Ausnehmung | 132 | Festlegungsrand |
| 80 | Verstärkungselement | | |

## Patentansprüche

1. Torsionaler Schwingungstilger (10, 60, 110) für einen Antriebsstrang, wobei der Schwingungstilger eine Nabe (14) und eine Schwungmasse (12) aufweist und wobei der Schwingungstilger (10, 60, 110) eine Verbindungseinrichtung (16) mit einem ersten Elastomerkörper (28) und einem zweiten Elastomerkörper (30) aufweist, welche die Nabe (14) und die Schwungmasse (12) elastisch miteinander verbinden, wobei die Verbindungseinrichtung (16) wenigstens ein Verstärkungselement (32, 70, 80, 90) aufweist, das wenigstens teilweise in den ersten und zweiten Elastomerkörper (28, 30) eingebettet ist, **dadurch gekennzeichnet, dass** die Verbindungseinrichtung (16) eine Außenhülse (34) aufweist, die an einem Befestigungsabschnitt (24) der Schwungmasse (12) anliegt, dass der erste Elastomerkörper (28) an die Nabe (14) und an das Verstärkungselement (32, 70, 80, 90) anvulkanisiert ist, dass der zweite Elastomerkörper (32) an das Verstärkungselement (32, 70, 80, 90) und die Außenhülse (34) anvulkanisiert ist und dass das Verstärkungselement (32, 70, 80, 90) eine zylindrische Zwischenhülse aufweist.

2. Schwingungstilger gemäß Anspruch 1, **dadurch gekennzeichnet, dass** das Verstärkungselement (32, 70, 80, 90) eine Vielzahl von Ausnehmungen (72) zur Aufnahme von Elastomer aufweist.

3. Schwingungstilger gemäß einem der voranstehenden Ansprüche, **dadurch gekennzeichnet, dass** das Verstärkungselement (32, 70, 80, 90) in einer Umfangsrichtung hintereinander angeordnete und voneinander beabstandete Aussparungen (82) aufweist.

4. Schwingungstilger gemäß einem der voranstehenden Ansprüche, **dadurch gekennzeichnet, dass** die Verbindungseinrichtung (16) in die Schwungmasse (12) einpressbar ist.

5. Schwingungstilger gemäß Anspruch 4, **dadurch gekennzeichnet, dass** die Verbindungseinrichtung (16) in Umfangsrichtung wenigstens eine Ausnehmung (36) aufweist, die beim Einpressen in die Schwungmasse (12) schließbar ausgebildet ist.

6. Schwingungstilger gemäß einem der voranstehenden Ansprüche, **dadurch gekennzeichnet, dass** die Verbindungseinrichtung (16) einen Hauptabschnitt (62), der sich im Wesentlichen in axialer Richtung erstreckt, und einen Kragenabschnitt (64) aufweist, der in radialer Richtung von dem Hauptabschnitt (62) abragt, wobei die Nabe einen Kragenabschnitt aufweist, der sich in radialer Richtung erstreckt und der an dem Kragenabschnitt (64) der Verbindungseinrichtung anliegt.

7. Schwingungstilger gemäß einem der voranstehenden Ansprüche, **dadurch gekennzeichnet, dass** die Schwungmasse (12) einen scheibenförmigen Verbindungsabschnitt (22) aufweist, in dem eine Öffnung (18) zur Aufnahme einer Auslenkungsdämpfungseinrichtung (114) angeordnet ist.

8. Schwingungstilger gemäß Anspruch 7, **dadurch gekennzeichnet, dass** die Auslenkungsdämpfungseinrichtung (114) einen ringförmigen Körper (116) aufweisen, von dem jeweils axial endseitig radial nach außen Vorsprünge (118) zum Einclipsen in die Öffnungen (18) derart abragen, dass die Vorsprünge (118) axial endseitige Kanten der Öffnungen (18) im eingeklipsten Zustand radial übergreifen.

9. Schwingungstilger gemäß Anspruch 7, **dadurch gekennzeichnet, dass** die Auslenkungsdämpfungseinrichtung (114) einen aus einem Metallband (126) durch Rollformen erhaltbaren ringförmigen Körper aufweisen, von dem an einer ersten axialen Endseite ein Randflansch (130) zur axialen Positionierung der Auslenkungsdämpfungseinrichtung (114) in der Öffnung (18) radial nach außen abragt und wobei eine zweite axiale Endseite zur Festlegung der Auslenkungsdämpfungseinrichtung (114) umgebördelt ist.

## Claims

1. Torsional vibration absorber (10, 60, 110) for a drive train, the vibration absorber having a hub (14) and an inertia mass (12), and the vibration absorber (10, 60, 110) having a connecting device (16) with a first elastomer body (28, 30) and a second elastomer body (30) that elastically connects the hub (14) and the inertia mass (12) with one another, wherein the connecting device (16) comprises at least one reinforcing member (32, 70, 80, 90) which is at least partially embedded in the elastomer body (28, 30) **characterized in that** the connecting device (16) comprises an outer sleeve (34) abutting a mounting portion (24) of the inertia mass (12), that the first elastomeric body (28) is vulcanized to the hub (14) and to the reinforcing member (32, 70, 80, 90), that the second elastomeric body (32) is vulcanized to the reinforcing member (32, 70, 80, 90) and to the outer sleeve (34), and **in that** the reinforcing member (32, 70, 80, 90) has a cylindrical spacer sleeve (34).

2. Vibration absorber according claim 1, **characterized in that** the reinforcing member (32, 70, 80, 90) has a plurality of cut-outs (72) for accommodating elastomer.

3. Vibration absorber according to any one of the preceding claims, **characterized in that** the reinforcing member (32, 70, 80, 90) has recesses (82) disposed one behind the other in a circumferential direction and spaced apart.

4. Vibration absorber according to any one of the preceding claims, **characterized in that** the connecting device (16) can be pressed into the inertia mass (12).

5. Vibration absorber according to claim 4, **characterized in that**, in the circumferential direction, the connecting device (16) has at least one cut-out (36) that is configured so that can be closed during pressing into the inertia mass (12).

6. Vibration absorber according to any one of the preceding claims, **characterized in that** the connecting device (16) has a main portion (62), which substantially extends in the axial direction, and a collar portion (64), which protrudes in the radial direction from the main portion (62), wherein the hub has a collar portion extending in the radial direction and resting against the collar portion (64) of the connecting device.

7. Vibration absorber according to any one of the preceding claims, **characterized in that** the inertia mass (12) a disc-shaped connecting portion (22) in which an opening (18) for accommodating a deflection damping device (114) is disposed.

8. Vibration absorber according to claim 7, **characterized in that** the deflection damping device (114) has an annular body (116), from which projections (118) for snap-in attachment in the openings (18) project radially outwards, in each case axially at the end faces, in such a way that, in the snapped-in state, the projections (118) radially reach over edges, which are located axially at the ends, of the openings (18).

9. Vibration absorber according to claim 7, **characterized in that** the deflection damping device (114) has an annular body that can be obtained from a metal strip (126) by roll forming, from which, at a first axial end face, an edge flange (130) for the axial positioning of the deflection damping device (114) in the opening (18) protrudes radially outwards, and wherein a second axial end face is beaded for fixing the deflection damping device (114).

## Revendications

1. Amortisseur de vibrations de torsion (10, 60, 110) pour une ligne d'entraînement, ledit amortisseur de vibrations comprenant un moyeu (14) et une masse de volant d'inertie (12), et ledit amortisseur de vibrations (10, 60, 110) comprenant un moyen de connexion (16) ayant un premier corps élastomère (28, 30) et un deuxième corps élastomère (30) reliant de manière élastique le moyeu (14) et la masse du volant d'inertie (12), les moyen de connexion (16) comprenant au moins un élément de renforcement (32, 70, 80, 90) au moins partiellement noyé dans les premier et deuxième corps élastomères (28, 30), **caractérisé en ce que** ledit moyen de connexion (16) comprend un manchon extérieur (34) venant en butée contre une partie de montage (24) de ladite masse de volant d'inertie (12), **en ce que** ledit premier corps élastomère (28) est vulcanisé sur ledit moyeu (14) et ledit élément de renforcement (32, 70, 80, 90), **en ce que** le deuxième corps élastomère (32) est vulcanisé sur l'élément de renforcement (32, 70, 80, 90) et le manchon extérieur (34), et **en ce que** l'élément de renforcement (32, 70, 80, 90) présente un manchon intermédiaire cylindrique.

2. Amortisseur de vibrations selon la revendication 1, **caractérisé en ce que** l'élément de renforcement (32, 70, 80, 90) présente une pluralité d'évidements (72) pour recevoir de l'élastomère.

3. Amortisseur de vibrations selon l'une des revendications précédentes, **caractérisé en ce que** l'élément de renforcement (32, 70, 80, 90) présente des évidements (82) disposés les uns derrière les autres dans la direction périphérique et espacés les uns des autres.

4. Amortisseur de vibrations selon l'une des revendications précédentes, **caractérisé en ce que** le moyen de connexion (16) peut être enfoncé dans la masse du volant d'inertie (12).

5. Amortisseur de vibrations selon la revendication 4, **caractérisé en ce que** le moyen de connexion (16) présente au moins un évidement (36) dans la direction circonférentielle qui est conçu pour pouvoir être fermé lorsqu'il est enfoncé dans la masse du volant d'inertie (12).

6. Amortisseur de vibrations selon l'une quelconque des revendications précédentes, **caractérisé en ce que** le moyen de connexion (16) comprend une partie principale (62) s'étendant sensiblement dans la direction axiale et une partie de collier (64) faisant saillie dans la direction radiale depuis la partie principale (62), le moyeu ayant une partie de collier s'étendant dans la direction radiale et venant en butée contre la partie de collier (64) du moyen de connexion.

7. Amortisseur de vibrations selon l'une quelconque des revendications précédentes, **caractérisé en ce que** la masse du volant d'inertie (12) présente une partie de raccordement (22) en forme de disque dans laquelle est ménagée une ouverture (18) destinée à recevoir un dispositif d'amortissement de la déflexion (114).

8. Amortisseur de vibrations selon la revendication 7, **caractérisé en ce que** le dispositif d'amortissement de la flexion (114) présente un corps annulaire (116), à partir duquel des saillies (118) destinées à s'encliqueter dans les ouvertures (18) font respectivement saillie radialement vers l'extérieur au niveau des extrémités axiales, de telle sorte que les saillies (118) recouvrent radialement les bords d'extrémité axiaux des ouvertures (18) à l'état encliqueté.

9. Amortisseur de vibrations selon la revendication 7, **caractérisé en ce que** le dispositif d'amortissement de déflexion (114) a un corps annulaire qui peut être obtenu à partir d'une bande métallique (126) par laminage et à partir duquel une bride de bord (130) fait saillie radialement vers l'extérieur au niveau d'un premier côté d'extrémité axiale pour le positionnement axial du dispositif d'amortissement de déflexion (114) dans l'ouverture (18), et un second côté d'extrémité axiale étant bridé pour fixer le dispositif d'amortissement de déflexion (14).
